Europäisches Patentamt

European Patent Office

Office européen des brevets

(19)

(11) **EP 0 613 545 B1**

(12) **EUROPÄISCHE PATENTSCHRIFT**

(45) Veröffentlichungstag und Bekanntmachung des Hinweises auf die Patenterteilung:
**25.09.1996 Patentblatt 1996/39**

(21) Anmeldenummer: **92924611.4**

(22) Anmeldetag: **27.11.1992**

(51) Int Cl.[6]: **F25B 49/02**, F25B 41/00

(86) Internationale Anmeldenummer:
**PCT/EP92/02739**

(87) Internationale Veröffentlichungsnummer:
**WO 93/11394 (10.06.1993 Gazette 1993/14)**

(54) **VERFAHREN ZUR EINSTELLUNG, REGELUNG UND ÜBERWACHUNG DES FÜLLUNGSGRADS EINES KÄLTEMITTELVERDAMPFERS**

PROCESS FOR SETTING, CONTROLLING AND MONITORING THE LEVEL IN A REFRIGERANT EVAPORATOR

PROCEDE POUR LA MISE AU POINT, LE REGLAGE ET LA SURVEILLANCE DU DEGRE DE REMPLISSAGE D'UN EVAPORATEUR DE FLUIDE FRIGORIGENE

(84) Benannte Vertragsstaaten:
**DE DK ES FR GB IT**

(30) Priorität: **28.11.1991 DE 4139064**

(43) Veröffentlichungstag der Anmeldung:
**07.09.1994 Patentblatt 1994/36**

(73) Patentinhaber: **BUCK, Wilhelm**
**D-49356 Diepholz (DE)**

(72) Erfinder: **BUCK, Wilhelm**
**D-49356 Diepholz (DE)**

(74) Vertreter: **Spalthoff, Adolf, Dipl.-Ing. et al**
**Patentanwälte,**
**Dipl.-Ing. A. Spalthoff,**
**Dipl.-Ing. K. Lelgemann,**
**Postfach 34 02 20**
**45074 Essen (DE)**

(56) Entgegenhaltungen:
**DE-A- 4 006 040**      **US-A- 4 571 951**
**US-A- 5 050 393**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Einstellung, Regelung und Überwachung des Füllungsgrads eines in einem geschlossen Kreislauf einer Kältemaschine angeordneten und einen Kältemittelmassenstrom zu einem im wesentlichen trockenen Sauggas verdampfenden Kältemittelverdampfers.

Bei diesem Verfahren wird in eine dem Kältemittelverdampfer nachgeordnete Sauggasleitung ein beheizbarer Meßkörper eingesetzt. Dieser wird von dem aus dem Kältemittelverdampfer stammenden Sauggas umspült. Der Meßkörper wird auf eine Temperatur aufgeheizt, die die des Sauggases übersteigt. Das Auftreffen von Flüssigkeitstropfen des Kältemittels auf den Meßkörper und damit der Feuchtigkeitsgehalt des aus dem Kältemittelverdampfer stammenden Sauggases wird erfaßt, indem der zur Verdampfung der auf den Meßkörper auftreffenden Flüssigkeitstropfen erforderliche Energiebedarf gemessen bzw. ermittelt wird.

Ein derartiges Verfahren bzw. vergleichbare Verfahren sind aus der DE-OS 39 34 801 und aus der DE-OS 40 06 040 bekannt. Bei dem Einsatz der bekannten Verfahren im Zusammenhang mit in den beiden genannten Druckschriften beschriebenen Kälteanlagen ist festgestellt worden, daß eine optimale Einstellung, Regelung und Überwachung des Füllungsgrads des Kältemittelverdampfers aufgrund des am Meßkörper ermittelten Meßsignals beim Betrieb der Kälteanlage nicht immer erreicht werden konnte. Dies ist u.a. auf eine unzureichende Signalverarbeitung zurückzuführen.

Der Erfindung liegt demgemäß die Aufgabe zugrunde, das gattungsgemäße Verfahren zur Einstellung, Regelung und Überwachung des Füllungsgrads eines Kältemittelverdampfers derart weiterzubilden, daß hinsichtlich derjenigen Betriebszustände, für die die betreffende Kältemaschine ausgelegt ist, der Kältemittelverdampfer optimal eingestellt, geregelt und überwacht werden kann.

Diese Aufgabe wird erfindungsgemäß durch ein Verfahren mit den Merkmalen des Anspruchs 1 gelöst.

Hierdurch wird zum einen sichergestellt, daß aufgrund elektronischen Rauschens und Strömungsbewegungen und -veränderungen auftretende Signalschwankungen keine Neueinstellung bzw. Veränderung des Betriebszustands des Kältemittelverdampfers zur Folge haben. Durch die Einstellung des Grenz- bzw. Referenzwerts, der einem gerade noch zulässigen Feuchtigkeitsgehalt des Sauggases entsprechen oder aber auch dem völlig trockenen Sauggas entsprechen kann, ist eine Anpassung des Verfahrens an unterschiedliche Kältemittel und an unterschiedliche Kälteanlagen möglich.

Es ist möglich, als Meßgröße die Temperatur des Meßkörpers zu verwenden, die dann mittels eines Temperaturfühlers erfaßt wird. Bei diesem Verfahren wird unmittelbar die Abkühlung des Meßkörpers ermittelt, die beim Auftreffen und Verdampfen von Flüssigkeitstropfen auf seiner Außenfläche infolge der zur Verdampfung benötigten Verdampfungswärme entsteht. Hierbei werden Spannung, Strom und/oder elektrische Leistung konstant gehalten.

Stattdessen kann auch derjenige Energieaufwand ermittelt werden, der zur Aufrechterhaltung einer konstanten Temperatur des Meßkörpers oberhalb der Referenztemperatur erforderlich ist, wobei dann die zur Verdampfung von Flüssigkeitstropfen erforderliche Energie dem Meßkörper durch eine ohnehin für die Beheizung des Meßkörpers vorhandene Energieversorgungsanlage zugeführt wird.

Als eigentliche Meßgröße können in diesem Fall die Spannung, die Stromstärke oder auch die elektrische Leistung dienen, die durch die zur Beheizung des Meßkörpers eingesetzte Energieversorgungsanlage zur Verfügung gestellt wird.

Eine besonders genaue und aussagekräftige Erfassung der Meßgröße ergibt sich, wenn in einem vorgebbaren Zeitintervall in jeweils gleichen Zeitabständen ein die Meßgröße angebendes Meßsignal erfaßt wird und die während des Zeitintervalls erfaßten Meßsignale auf Größenklassen aufgeteilt werden, wobei der ersten Größenklasse alle Meßsignale, die zwischen einem Meßsignalminimalwert und dem um einen Differentialwert vergrößerten Meßsignalminimalwert liegen und der letzten Größenklasse alle Meßsignale zugeordnet werden, die zwischen einem Meßsignalmaximalwert und dem um den Differentialwert verringerten Meßsignalmaximalwert liegen, wobei sich die Anzahl der Größenklassen aus dem Quotienten aus der Differenz zwischen dem Meßsignalmaximalwert und dem Meßsignalminimalwert durch den Differentialwert ergibt.

Zur Erhöhung der Aussagekraft der ermittelten, für die Meßgröße indikativen Meßsignale kann der Differentialwert so bemessen werden, daß die erste Größenklasse das sich aus dem elektronischen Rauschen der Meß- und Auswerteeinheit ergebende erste Teilsignal umfaßt und die erste plus zweite Grössenklasse etwa dem Grundsignal entspricht. Sobald ein Meßsignal anfällt, welches oberhalb der zweiten Größenklassen einzuordnen ist, steht damit fest, daß das Sauggas im Bereich des Meßkörpers nicht völlig trocken ist.

Bei Umwandlung des analogen Meßsignals in ein digitales Wort kann die Klassierung der Meßwerte vorteilhaft wie folgt vorgenommen werden:

Beim Meßvorgang werden in einem Zeitintervall Delta T in gleichen Zeitabständen, die auch Abtastintervalle Ta genannt werden, m Meßwerte erfaßt, d.h. Delta T = m x Ta.

Das Meßsignal der Meßvorrichtung bzw. des Tröpfchensensors wird dann z.B. in einen Analog/Digital-Umsetzer eingespeist. Dieser liefert nach jeder Abtastung ein digitales Wort, das proportional zur Amplitude eines eingegebenen Meßsignals ist.

Das digitale Wort ist zugleich die Nummer der Klasse, in die dieser Meßwert zur Ermittlung der Amplitudenverteilung einzuordnen ist. Beispielsweise ergeben sich bei einem 10-bit-Analog/Digital-Umwandler 1024 Klassen, deren Klassenbreite bei einem Meßbereich 0 bis 30 Volt Delta U = 29,3 mV ist.

Das Auftreten eines digitalen Wortes wird als Ereignis aufgefaßt. Die Zahl dieser Ereignisse wird für jede Klasse getrennt aufsummiert. Die Summe stellt die absolute Häufigkeit in Klasse n dar.

In verfahrenstechnisch wenig aufwendiger Weise läßt sich zur Aufteilung der Meßsignale in die genannten Größenklassen auch ein Vielkanalanalysator einsetzen.

Für Meßwerte, die im Bereich des Grundsignals liegen, gilt, daß die gesamte dem Meßfühler während des Abtastintervalls zugeführte Energie durch das vorbeiströmende, trockene Sauggas abgeführt wird. Dagegen gilt für Meßwerte, die nicht zum Bereich des Grundsignals gehören, daß von der dem Meßfühler während des Abtastintervalls zugeführten Energie ein Anteil zur Verdampfung des flüssigen Kältemittels, das auf den Meßfehler auftrifft, aufgewandt wird. Aus diesem Energieanteil kann mit Hilfe der Verdampfungsenthalpie die Menge des flüssigen Kältemittels berechnet werden, die im betrachteten Abtastintervall im Bereich des Meßfühlers vorlag.

Eine wesentliche Vereinfachung des Verfahrens ergibt sich, wenn in einem vorgebbaren Zeitintervall in jeweils gleichen Zeitabständen ein die Meßgröße angebendes Meßsignal erfaßt, aus den sich ergebenden Werten ein Minimal- und ein Maximalwert ermittelt, die Differenz zwischen Maximal- und Minimalwert errechnet und als Auswertegröße mit der sich aufgrund des elektronischen Rauschens und der Vorbeiströmung des trockenen Sauggases am Meßkörper ergebenden Rauschbreite verglichen wird. Für bestimmte Kälteanlagen und bestimmte Kältemittel kann dieses Verfahren ausreichend sein, um einen optimalen Betrieb des Kältemittelverdampfers sicherzustellen.

Des weiteren ist es möglich, mittels einer Erkennungsschaltung eine binäre Impulsfolge zu erzeugen und die Anzahl der während eines vorgegebenen Zeitraums anfallenden Impulse mit einem für den maximal zulässigen Feuchtigkeitsgehalt des Sauggases festgelegten entsprechenden Grenzwert zu vergleichen.

Eine weitere vorteilhafte Verfahrensweise besteht darin, mittels jeweils einer Erkennungsschaltung das Minimum bzw. das Maximum der Meßgröße zu ermitteln, mittels analoger Differenzbildung die Amplitude zwischen zwei aufeinanderfolgenden Extremwerten als Auswertegröße zu ermitteln und mit einem für den maximal zulässigen Feuchtigkeitsgehalt des Sauggases festgelegten entsprechenden Grenzwert zu vergleichen. Hierbei wird zur Bestimmung des Flüssigkeits- bzw. Feuchtigkeitsgehalts noch die Tröpfchengeschwindigkeit oder die Tröpfchendichte herangezogen.

Alternativ können die Meßsignale durch eine mathematische Funktion, z.B. durch ein Polynom approximiert werden, wobei dann die Standardabweichung von der Funktion als Auswertegröße errechnet und mit einem für den maximal zulässigen Feuchtigkeitsgehalt des Sauggases festgelegten entsprechenden Grenz- bzw. Referenzwert verglichen wird.

Bei den genannten Verfahrensalternativen ist die Vorgabe von Zeitintervallen erforderlich, wobei es jedoch u.U. zweckmäßig sein kann, nach einer Verstellung des Betriebszustands des Kältemittelverdampfers das Verfahren neu anlaufen zu lassen, wenn die Durchführung des Verfahrens lange dauert. In der Regel wird jedoch ein Zeitintervall vorgegeben, wobei während des Zeitintervalls hinreichend viele Meßwerte eingelesen und verarbeitet werden und diese Vorgehensweise fortlaufend wiederholt wird.

Falls die Grenzfrequenz, d.h. der Tiefpaß der den Meßkörper aufweisenden Meßvorrichtung so groß ist, daß die vom Kompressor der Kälteanlage verursachte Pulsation des Sauggases das Meßsignal beeinflußt, muß dieses zusätzliche periodische Signal u.U. berücksichtigt oder kompensiert werden. Falls das Grundsignal hierdurch störend beeinflußt wird, kann diese Störung durch eine analoge oder digitale Nachverarbeitung weggefiltert werden.

Des weiteren ist es auch möglich, die Meßdaten einer Spektralanalyse zu unterwerfen. Zu diesem Zweck wird aus den Meßdaten die Autokorrelationsfunktion bestimmt oder eine andere Funktion, die aus der Autokorrelationsfunktion gewonnen werden kann, z.B. mit Hilfe einer Fourier-Transformation.

Vergleichs standard ist die Funktion, die aus dem Grundsignal ermittelt wird. Sobald sich die aus den Meßsignalen gewonnene Funktion vom Vergleichs standard mehr unterscheidet als ein experimentell ermittelter Grenzwert, ist das Sauggas als naß anzusehen.

Sofern die Tröpfchendichte im Sauggasstrom vergleichsweise groß ist, ist es denkbar, daß im Meßzeitraum nur solche Meßwerte aufgenommen werden, die durch auf den Meßkörper auftreffende Tröpfchen beeinflußt sind. Um auch in diesem Fall das Grundsignal zuverlässig ermitteln zu können, wird auf eine üblicherweise anzuwendende Art die Strömungsgeschwindigkeit des Sauggases separat und unabhängig ermittelt. Bei der Ermittlung des Grundsignals wird berücksichtigt, daß sich bei trockenem Sauggas nach einer entsprechend durchgeführten Kalibrierung aus dem Grundsignal die Strömungsgeschwindigkeit des Sauggases bestimmen läßt. Umgekehrt kann deshalb auch, wenn die den Meßkörper aufweisende Meßvorrichtung als Geschwindigkeitsmesser für trockenes Gas kalibriert und die Strömungsgeschwindigkeit bekannt ist, eine Hilfsgröße ermittelt werden, die dem Grundsignal des Tröpfchenfühlers entspricht, die aber in der Regel keinen Anteil an elektronischem und strömungsmechanischem Rauschen umfaßt.

An dieser Stelle sei darauf hingewiesen, daß eine exakte Bestimmung des Feuchtigkeitsgehalts des Sauggases bzw. des Tröpfchenanteils nur möglich ist, wenn der Grundsignalwert und der dem Tröpfchenanteil entsprechende Signalwert voneinander getrennt werden können. Das Meßsignal bei einem feuchten Sauggasstrom setzt sich zusammen aus dem Signalanteil für das elektronische Rauschen, dem Signalanteil für den vorbeiströmenden trockenen Sauggasstrom, dem Signalanteil für die überlagerten, ggf. selbstinduzierten Turbulenzeffekte und dem Signalanteil für die Tröpfchen, der einen schnellen und einen trägen Effekt aufweisen kann. Bei geringer Tröpfchendichte kann das Grundsignal erfindungsgemäß unmittelbar aus den Meßwerten des Meßkörpers bzw. Tröpfchenfühlers ermittelt werden, wenn die im folgenden aufgeführten Bedingungen erfüllt sind:

- Die Abtastzeit muß so klein sein, daß eine ausreichende Auflösung erzielt wird.

- Die gesamte Meßzeit muß so lang, d.h. die Anzahl der Meßpunkte muß so groß sein, daß zumindest einige Meßwerte keinen Tröpfchenanteil enthalten. Wenigstens einer der Meßwerte sollte in einer zum Grundsignal gehörenden Klasse liegen, um den Fehler klein zu halten. Der Feuchtigkeitsgehalt muß also so klein sein, daß in der Meßzeit nicht alle Meßwerte vom Tröpfchenanteil beeinflußt sind. Diese Bedingung kann in der Regel nur erfüllt werden, wenn die Energie, die dem Meßkörper in der Meßzeit durch den Verdampfungsprozeß der auftreffenden Tröpfchen entzogen wird, im Vergleich zu der Energie, die dem Meßkörper in der Meßzeit durch das Vorbeiströmen des trockenen Sauggases entzogen wird, sehr klein ist.

- In der Meßzeit darf sich die Geschwindigkeit des Sauggases praktisch nicht verändern.

Im folgenden wird die Erfindung an Hand von Ausführungsbeispielen unter Bezugnahme auf die Zeichnungen näher erläutert.
Es zeigen:

| Figur 1 | eine Prinzipdarstellung einer Kälteanlage, bei der das erfindungsgemäße Verfahren zur Einstellung, Regelung und Überwachung des Füllungsgrads eines Kältemittelverdampfers eingesetzt wird. |
| Figur 2 und 3 | Strömungsformen im Verdampfer bei unterschiedlichen Massenstromdichten; |
| Figur 4 | das Meßsignal einer Meßvorrichtung bei konstanter Temperaturdifferenz; |
| Figur 5 | das Meßsignal der Meßvorrichtung bei konstanter Versorgungsspannung; |
| Figur 6 und 6A | Darstellungen des elektronischen Rauschens; |
| Figur 7 und 7A | Darstellungen des Grundsignals und |
| Figur 8, 8A, 9, 9A | Darstellungen des Meßsignals bei feuchtem Sauggas. |

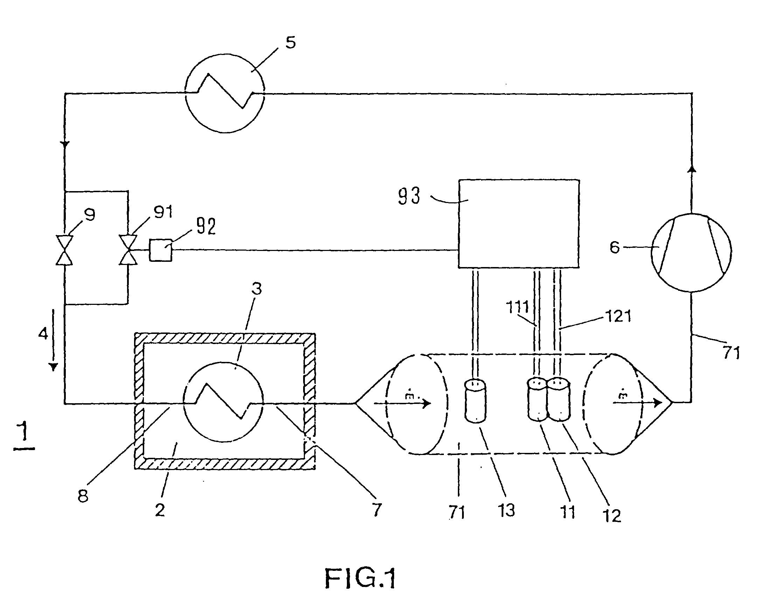

In Figur 1 ist eine Kälteanlage 1 mit einem zu kühlenden Raum 2 dargestellt, z.B. einem Kühlschrank, dem Fahrgastraum eines Fahrzeugs od.dgl., in dem ein Kältemittelverdampfer 3 für einen Kältemittelmassenstrom 4 vorgesehen ist.

Der Kältemittelmassenstrom 4 durchläuft einen Kreislauf zwischen einem im Kältemittelverdampfer 3 wirksamen niedrigen Druck und einem in einem Kondensator 5 wirksamen hohen Druck. Ein Kompressor 6 saugt am Ausgang 7 des Kältemittelverdampfers 3 den zu einem sog. Sauggas verdampften Kältemittelmassenstrom 4 ab. Das Sauggas sollte am Eingang des Kompressors 6 im wesentlichen flüssigkeitsfrei sein. Durch die Wirkung des Kompressors 6 wird der am Ausgang 7 des Kältemittelverdampfers 3 abgesaugte Dampf bzw. das Sauggas zu hohem Druck komprimiert und im Kondensator 5 in einen im wesentlichen flüssigen Kältemittelmassenstrom hohen Drucks kondensiert, also verflüssigt.

Um dem Kältemittelverdampfer 3 den Kältemittelmassenstrom 4 mit dem für die Verdampfung erniedrigten Druck zuführen zu können, ist in die Zuleitung zum Eingang 8 des Kältemittelverdampfers 3 ein Drosselventil 9 eingeschaltet. Dieses Drosselventil 9 kann eine bekannte Konstruktion für ein regelbares Ventil haben, mit dem der Druck oder die Größe des Kältemittelmassenstroms 4 so eingestellt wird, daß der Kältemittelverdampfer 3 weder überfüllt noch unterfüllt wird und der Kältemittelmassenstrom 4 seine optimale Größe für die jeweilige Kälteanlage 1 erhält. Im einfachsten Fall kann das Drosselventil 9 ein Kapillarrohr sein. Es kann aber auch ein elektrisch, elektronisch oder elektromagnetisch regelbares Ventil verwendet werden oder ein thermostatisches Expansionsventil, Blockventil od.dgl.

Damit der Kältemittelmassenstrom 4 der Kälteanlage 1 den gewünschten Wert erhalten kann, ist in eine Leitung 71 zwischen Kältemittelverdampfer 3 und Kompressor 6 eine Meßvorrichtung 11, 12, 13 eingefügt, die eine Präsenz von Flüssigkeitstropfen im Sauggaus detektiert und gestattet, denjenigen Zustand einzustellen, bei dem gerade noch keine Flüssigkeitstropfen des Kältemittels in einer den Betrieb der Kältemaschine beeinträchtigenden Qualität im Sauggas auftreten. Diese als sog. Tröpfchenfühler ausgebildete Meßvorrichtung 11, 12, 13 enthält einen beheizbaren Meßkörper 11, der in den Innenraum der Leitung 71 eingefügt ist, und zwar wärmeisoliert und vakuum- und druckdicht gegen die ortsfesten Teile seiner Umgebung, wie z.B. gegen die Wandung der Leitung 71. Die Leitung 71 ist in Figur 1 zur besseren Kenntlichmachung vergrößert dargestellt.

Der beheizbare Meßkörper 11 ist z.B. ein Heizwiderstand, der durch einen über eine Leitung 111 von außen zugeführten elektrischen Strom auf eine vorbestimmte Temperatur aufheizbar ist. Der beheizbare Meßkörper 11 ist mit einem Temperaturfühler 12 zu einer als Meßwiderstand ausbildbaren Einheit verbunden, mittels dem die jeweils detektierte Kühlung des beheizbaren Meßkörpers 11 über eine Leitung 121 ohne Verzögerung nach draußen gemeldet wird. Ein weiterer Temperaturfühler 13 ist getrennt von der Einheit aus beheizbarem Meßkörper 11 und erstem Temperaturfühler 12 aber in einer gemeinsamen Halterung innerhalb der Leitung 71 angeordnet und wird wie diese vom Sauggas umspült. Hierbei wird der Meßkörper 11 auf möglichst vielen Oberflächen vom Sauggas kontaktiert. Der Meßkörper 11 muß nicht in jedem Fall im Hauptstromweg des Sauggases liegen. Er kann also auch in einer Ausbuchtung der Sauggasleitung angeordnet sein, wenn das Sauggas mit evtl. vorhandenen Flüssigkeitspartikeln bzw. -tropfen in diese Ausbuchtungen eindringen kann.

Der Meß- und Regelvorgang der soweit beschriebenen Meßvorrichtung 11, 12, 13 läuft wie folgt ab:

Der Meßkörper 11 wird ununterbrochen mit konstanter Leistung, konstantem Strom oder konstanter Spannung auf eine vorbestimmte Temperatur aufgeheizt, beispielsweise auf eine 30K über der Temperatur des trockenen Sauggases. Die jeweils erreichte Temperatur des Meßkörpers 11 wird von dem mit dem Meßkörper 11 zu einer Einheit verbundenen ersten Temperaturfühler 12 direkt gemessen und ggf. angezeigt.

Der weitere Temperaturfühler 13 mißt ständig die direkte Temperatur des Sauggases selbst. Auch diese Temperatur wird ggf. angezeigt. Das Auftreffen von Flüssigkeitstropfen des Kältemittels auf den geheizten Meßkörper 11 verursacht einen Kühleffekt. Gründe für diesen Kühleffekt ist eine starke Vergrößerung des Wärmeübergangs, d.h. die Wärmeübergangszahl steigt, und die aufzubringende Verdampfungswärme.

Bei der meßtechnischen Nutzung dieses Kühleffekts läßt man den Meßkörper 11 abkühlen und mißt die Temperaturänderung mittels des Temperaturfühlers 12 z.B. als Absolutwert oder bezogen auf die Sauggastemperatur.

Bei einer anderen meßtechnischen Nutzung des Kühleffekts hält man die Temperatur des Meßkörpers 11 oder die Temperaturdifferenz zum Sauggas praktisch konstant, indem bei konstanter Spannung der Heizstrom entsprechend erhöht wird oder indem bei konstantem Strom die Heizspannung vergrößert wird oder indem ohne Spezifizierung von Spannung und Strom die Leistung erhöht wird. Strom, Spannung oder Leistung werden dann als Meßsignal verwendet.

Eine jähe Änderung des Meßsignals, das ist bei direkt gemessener Temperatur des Meßkörpers 11 und konstanter Leistungszufuhr der Temperaturabfall und bei konstant gehaltener Temperatur ein Anstieg von Spannung, Strom oder Leistung, ist ein sicherer Hinweis für die Überfüllung des Kältemittelverdampfers 3. Sobald nämlich der Kältemittelverdampfer 3 überfüllt ist, treten an seinem Ausgang Flüssigkeitströpfchen des Kältemittels auf, treffen auf den Meßkörper 11, erzeugen einen Kühleffekt und bewirken eine entsprechende Meßgröße im Meß-Regel- und/oder Anzeigekreis.

Mit dem vorstehend geschilderten Verfahren ist es möglich, den Füllungsgrad des Kältemittelverdampfers 3 optimal einzustellen bzw. zu regeln, bereits vorhandene Regelungseinrichtungen für den Füllungsgrad des Kältemittelverdampfers 3 zu kontrollieren, einen optimalen Füllungsgrad eines Kältemittelverdampfers 3 zu bestimmen und eine kontinuierliche Lecküberwachung der Kälteanlage 1 durchzuführen.

Hinsichtlich der Regelung des Füllungsgrads des Kältemittelverdampfers, der Bestandteil eines überfluteten Verdampfungsprozesses oder eines trockenen Verdampfungsprozesses sein kann, ist festzustellen, daß sich das vorstehend geschilderte Verfahren in erster Linie auf einen trockenen Verdampfungsprozeß bezieht. Das Auftreten von Flüssigkeitströpfchen im Sauggas in einer den Betrieb der Kälteanlage beeinträchtigenden Qualität muß vermieden werden, da es infolge der dann auftretenden Nachverdampfung von Kältemittel im Kompressor 6 zu einer Erniedrigung des Wirkungsgrads der Kälteanlage 1 führt und da aufgrund von Flüssigkeitsschlägen Vorrichtungselemente des Kompressors 6, z.B. Ventile, beschädigt werden können. Ein gewisser, geringer Flüssigkeitsgehalt kann zulässig sein, da zwischen der Meßvorrichtung und dem Kompressoreingang noch eine Verdampfung erfolgt und da, um eine optimale Verdampferleistung zu erzielen, die Überhitzung möglichst klein sein muß, was einen bestimmten, geringen Flüssigkeitsanteil bedingt.

Die vorstehend erwähnte, als Tröpfchenfühler ausgebildete Meßvorrichtung 11, 12, 13 kann nach zwei unterschiedlichen Methoden betrieben werden. Bei der ersten Methode wird die Differenz der Temperaturen zwischen dem beheizten Meßkörper 11 und dem als Referenzfühler fungierenden weiteren Temperaturfühler 13 konstant gehalten, obwohl die Kühlleistung des Meßkörpers 11 beim Auftreten von Flüssigkeitstropfen im Kältemittelmassenstrom erheblichen Schwankungen unterworfen ist. Hierzu wird die Spannung, die Stromstärke oder die elektrische Leistung zur Aufheizung des Meßkörpers 11 entsprechend geändert. Als Meßsignal dient dann die Spannung, die Stromstärke oder die elektrische Leistung.

Gemäß der zweiten Methode wird der Meßkörper 11 mit konstanter Spannung, konstanter Stromstärke oder konstanter elektrischer Leistung versorgt. Als Meßsignal dient dann die Temperaturdifferenz zwischen dem beheizten Meßkörper 11 und der am als Referenzfühler fungierenden weiteren Temperaturfühler 13 ermittelten Temperatur.

Ziel der Untersuchung des Sauggases ist es festzustellen, ob das Sauggas "feucht" bzw. "naß" ist. Wann dieser Zustand des Sauggases vorliegt, muß mit Hilfe eines u.U. experimentell ermittelten Kriteriums festgelegt werden. Ein Maß für die "Feuchtigkeit" bzw. "Nässe" des Sauggases ist der örtliche Flüssigkeitsgehalt. Dieser ist wie folgt definiert:

$$\text{Örtlicher Flüssigkeitsgehalt} = m'/m'+m'',$$

wobei m' der Masse der siedenden Flüssigkeit und m" der Masse des gesättigten Dampfes entspricht.

Mit Hilfe des örtlichen Dampfgehalts x kann der örtliche Flüssigkeitsgehalt auch wie folgt ausgedrückt werden:

Örtlicher Flüssigkeitsgehalt = 1 - x.

Wenn x den Wert "1" aufweist, bedeutet das, daß das Sauggas zu 100 % aus Gas besteht, also völlig trocken ist.

Zur Untersuchung des Sauggases wird das Meßsignal bzw. werden die Meßsignale der als Tröpfchenfühler ausgebildeten Meßvorrichtung 11, 12, 13 herangezogen. Dabei dienen als Meßsignal entweder die rohen, unbehandelten Signale der als Tröpfchenfühler ausgebildeten Meßvorrichtung 11, 12, 13 oder aber weiterverarbeitete Signale, z.B. die dem Meßkörper 11 zugeführte elektrische Leistung. Anfänglich sind nur das Spannungssignal der Meßvorrichtung 11, 12, 13 sowie die Temperatur des Meßkörpers 11 bekannt. Bei der Weiterverarbeitung der Meßsignale darf die in diesen enthaltene Information zur Beurteilung der Präsenz von Flüssigkeitströpfchen bzw. des örtlichen Flüssigkeitsgehalts nicht verlorengehen.

Die Meßsignale können analog und/oder digital untersucht werden. Bei beiden Methoden wird zunächst eine Auswertegröße erzeugt und dann benutzt. Beispiele für Auswertegrössen sind die Häufigkeit des Aufpralls von Flüssigkeitströpfchen auf den Meßkörper 11, die Amplitude des Meßsignals, das Integral des Meßsignals oder die Standardabweichung bei der Anwendung von Approximationsverfahren.

Zur Erzeugung von Auswertegrößen können Erkennungsschaltungen für Amplituden- und/oder Frequenzanalysen oder rechnergestützte Signalanalysen eingesetzt werden.

Die Auswertegrößen werden sog. Beurteilungskriterien unterworfen, um die Präsenz von Flüssigkeitströpfchen oder den örtlichen Flüssigkeitsgehalt zu bestimmen. Zu jeder Auswertegröße gibt es mindestens ein Beurteilungskriterium. Beispiele für Beurteilungskriterien sind:

- Mindestzahl der beobachteten Flüssigkeitströpfchen pro Zeiteinheit bei Messung der Häufigkeit der auftreffenden Flüssigkeitströpfchen,
- Mindestwert für das Integral bei Messung des Integrals zwischen einer vorgegebenen Untergrenze und dem vorkommenden Maximum der Auswertegröße.

Im folgenden wird ein Beispiel für eine besonders vorteilhafte Art und Weise der Auswertung ausführlich dargestellt. Hierzu werden an der Meßvorrichtung 11, 12, 13, die als Tröpfchenfühler ausgebildet ist, anfallende Spannungssignale U untersucht. In einem vorgegebenen Zeitintervall Delta T werden in gleichen Zeitabständen jeweils m Spannungssignale U erfaßt und für die anschließende Analyse aufbereitet. Zu diesem Zweck werden alle Spannungssignale U in n-Klassen aufgeteilt. In die niedrigste erste Klasse fallen alle Meß- bzw. Spannungssignale U, die größer als Umin und kleiner als Umin + Delta U sind. In die letzte bzw. größte Klasse entfallen alle Spannungssignale U, die größer als Umax - Delta U und kleiner als Umax sind. Die Anzahl der Größenklassen ergibt sich aus dem Quotienten aus der Differenz zwischen Umax und Umin durch Delta U. Das Ergebnis des vorstehend erläuterten Auswertungsverfahrens kann als Häufigkeitsverteilung oder als Histogramm dargestellt werden.

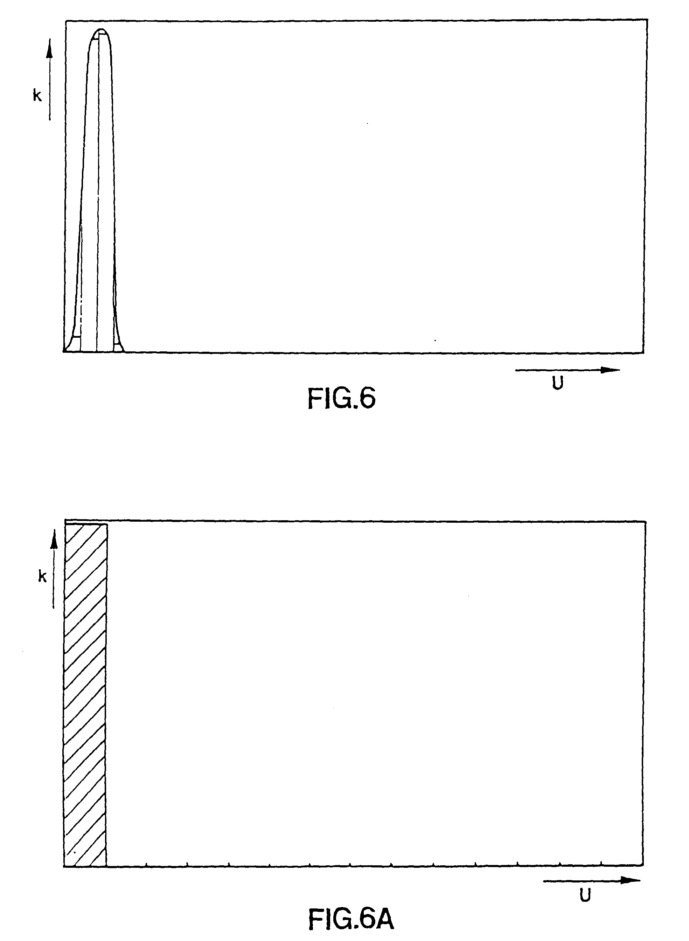

In den Figuren 6 und 6A ist das Ergebnis einer Messung dargestellt, bei der sich die Meßvorrichtung 11, 12, 13 in einem ruhenden, gasförmigen Medium befand. In diesem Fall werden nur der Grundwert und das elektronische Rauschen erfaßt, wobei in Figur 6A die Breite dieses Rauschens geringer oder maximal gleich Delta U ist.

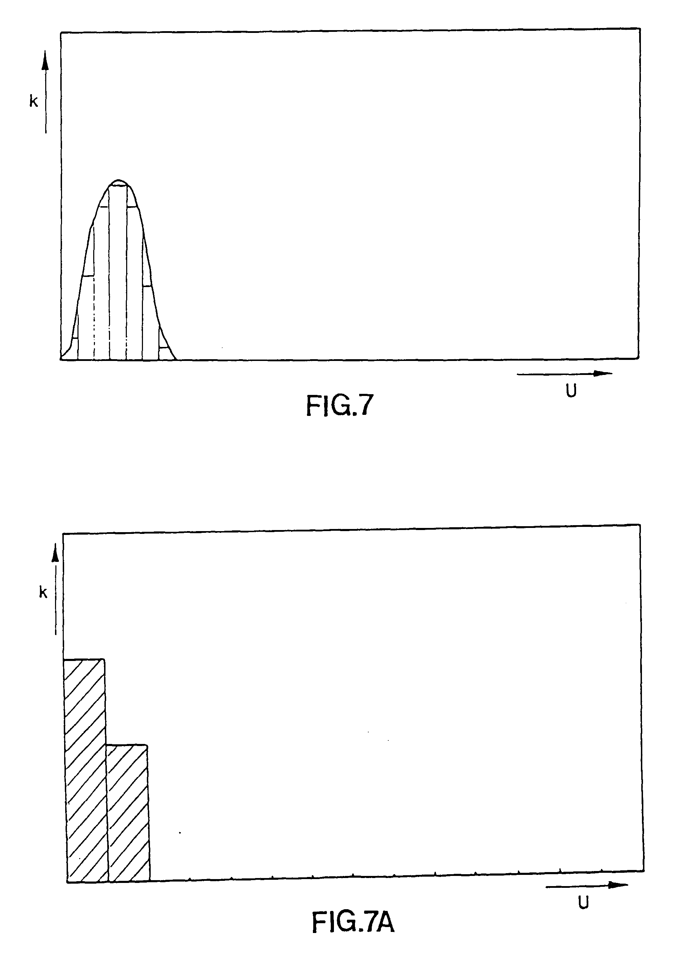

In den Figuren 7 und 7A ist das Ergebnis einer Messung dargestellt, bei der sich die als Tröpfchenfühler ausgebildete Meßvorrichtung 11, 12, 13 in absolut trockenem, gasförmigem Kältemittelstrom befindet. Die Änderung der Häufigkeitsverteilung bzw. des Histogramms gegenüber den Figuren 6 und 6A wird durch strömungsmechanische Effekte, z.B. durch Turbulenzen und Fluktuationen, verursacht. Die Gesamtbreite des elektronischen plus des strömungsmechanischen Rauschens in Figur 7A ist kleiner oder beträgt maximal 2 Delta U.

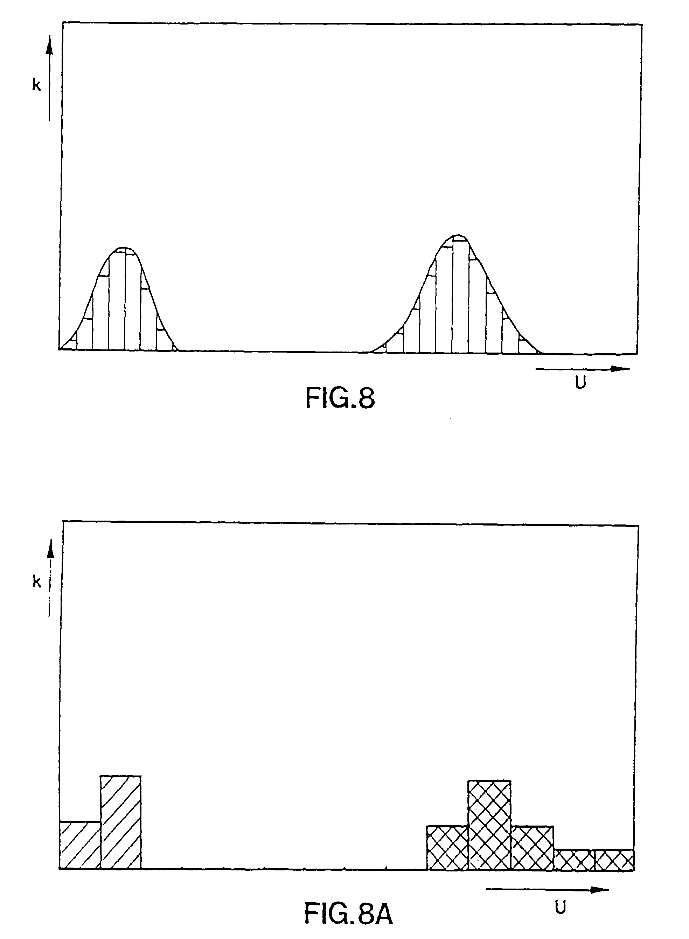

In den Figuren 8 und 8A ist das Ergebnis einer Messung dargestellt, bei der das Sauggas naß war. Ein Teil der Meßsignale liegt außerhalb des Bereichs des Grundsignals. Bei diesen Messungen mußte eine erhöhte Heizleistung für den Meßkörper 11 aufgebracht werden, da infolge von im Sauggas vorhandenen Flüssigkeitströpfchen der Meßkörper 11 zusätzlich gekühlt wurde.

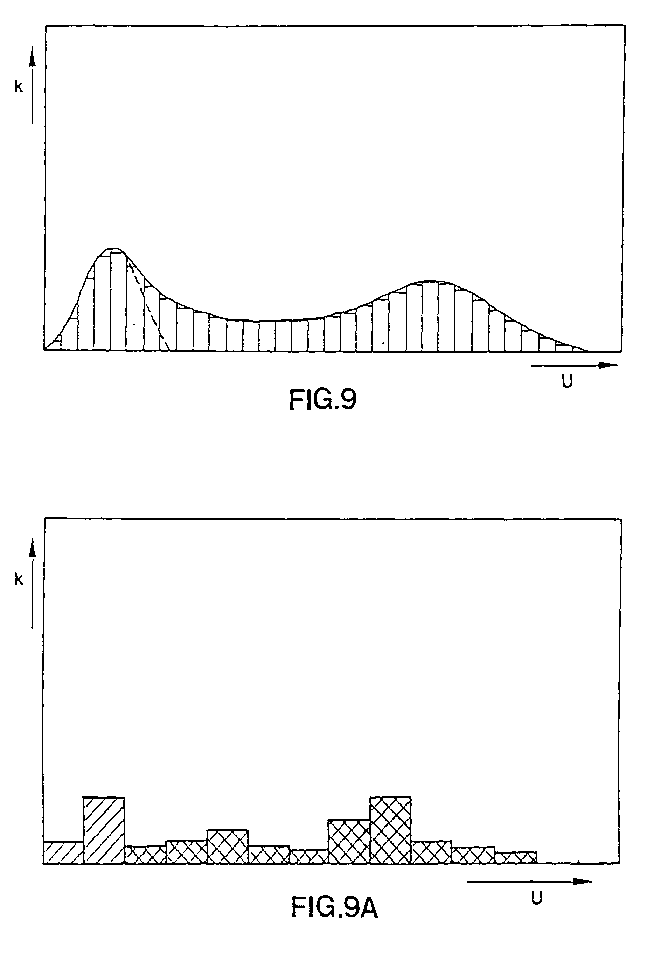

In den Figuren 9 und 9A ist das Ergebnis einer weiteren Messung dargestellt, bei der das Sauggas ebenfalls naß war. Im Gegensatz zu den Figuren 8 und 8A ist hier der durch Flüssigkeitströpfchen verursachte Signalbereich nicht von dem durch elektronisches und strömungsmechanisches Rauschen verursachten Signalbereich getrennt. Dieser in der Regel zu beobachtende Effekt wird durch die von den Flüssigkeitströpfchen verursachte Peakform bewirkt und entsteht durch die Präsenz von vielen Flüssigkeitströpfchen.

Sobald auch nur ein Meßsignal außerhalb des durch elektronisches und strömungsmechanisches Rauschen verursachten Signalbereichs liegt, ist das Sauggas nicht mehr trocken.

Sobald innerhalb des durch elektronisches und strömungsmechanisches Rauschen verursachten Signalbereichs keine Meßsignale mehr auftreten und diese sämtlich über den genannten Bereich hinaus verschoben sind, ist das Sauggas sehr naß. In diesem Fall ist eine Bestimmung des örtlichen Flüssigkeitsgehalts mit Unsicherheiten behaftet.

Das Grundsignal ist dann ohne weitere Maßnahmen nicht mehr ermittelbar. Um dennoch zu zuverlässigen Ergebnissen zu kommen, muß das Grundsignal unter Zurhilfenahme einer separaten Messung bzw. Ermittlung der Sauggasgeschwindigkeit bestimmt werden.

Wenn bei strömendem Sauggas nur Meßsignale im Bereich des elektronischen Rauschens ermittelt werden, ist die Elektronik nicht mehr in der Lage, die zur Aufrechterhaltung einer konstanten Temperatur am Meßkörper 11 erforderliche elektrische Leistung zu liefern. Ursächlich hierfür ist, daß das Sauggas in starkem Ausmaß naß ist oder daß der Meßpunkt sich außerhalb des konstruktiv vorgesehenen Meßbereichs befindet.

Aus den in den Figuren 8, 8A bzw. 9, 9A dargestellten Meßergebnissen läßt sich der örtliche Flüssigkeitsgehalt berechnen. Hierzu wird aus den Histogrammen entnommen, wieviel Energie zur Verdampfung des flüssigen Kältemittels aufgewandt wurde. Da außerdem die Verdampfungsenthalpie und die Anströmfläche des beheizbaren Meßkörpers 11 bekannt sind, kann der örtliche Flüssigkeitsgehalt 1 - x berechnet werden, wobei bei dieser Berechnung folgende Annahme gemacht wird.:

Alle auf den Meßkörper 11 auftretenden Flüssigkeitströpfchen werden vollständig verdampft.

Auswertegröße kann in diesem Fall der örtliche Flüssigkeitsgehalt 1 - x sein. Beurteilungskriterium ist ein experimentell ermittelter Grenzwert für 1 - x.

Alternativ kann als Auswertegröße in den Verfahren gemäß Figur 8A und Figur 9A die Zahl derjenigen Meßdaten gelten, die oberhalb der durch elektronisches und strömungsmechanisches Rauschen vorgegebenen Grenze oder eines anderen zu bestimmenden Grenzwerts liegen.

Die vorstehend geschilderte Auswertetechnik kann auch mit Hilfe eines Vielkanalanalysators durchgeführt werden, wobei dann die Kanäle des Vielkanalanalysators den oben genannten Größenklassen entsprechen.

In einer besonders stark vereinfachten Ausführungsform der vorstehend geschilderten Auswertetechnik werden von den m während des vorgegebenen Zeitintervalls Delta T aufgenommenen Meßsignalen der kleinste und der größte Wert ermittelt, wobei dann die Differenz zwischen den beiden Werten als Auswertegröße verwendet wird. Sobald diese Differenz größer ist als die durch das elektronische und das strömungsmechanische Rauschen verursachte Signalbreite, ist das Sauggas als naß anzusehen.

Alternativ zu der vorstehend geschilderten Auswertetechnik kann auch mittels einer sog. Erkennungsschaltung eine binäre Folge von Impulsen erzeugt werden. Sobald die Häufigkeit dieser Impulse, die der Auswertegröße entspricht, größer ist als eine vorgegebene, experimentell ermittelte Grenzzahl, die dem Beurteilungskriterium entspricht, ist das Sauggas naß bzw. ist der gesetzte Grenzwert für den örtlichen Flüssigkeitsgehalt im Sauggas überschritten.

Es ist auch möglich, mit Hilfe zweier Erkennungsschaltungen das Minimum und das Maximum der Meßsignale zu ermitteln und mittels einer sich daran anschließenden analogen Differenzbildung die Amplitude zwischen zwei aufeinanderfolgenden Extremwerten zu ermitteln, wobei die Amplitude dann der Auswertegröße entspricht. Sobald diese Amplitude größer als eine vorgegebene, experimentell ermittelte Grenzgröße, die dem Beurteilungskriterium entspricht, ist, ist das Sauggas naß bzw. ist die gesetzte Grenzgröße für den örtlichen Flüssigkeitsgehalt überschritten. Hierbei wird zur Bestimmung des Flüssigkeitsgehalts noch die Tröpfchengeschwindigkeit oder die Tröpfchendichte herangezogen.

Die Werte des Meßsignals können auch durch eine mathematische Funktion z.B. durch ein Polynom approximiert werden, wobei dann die Standardabweichung als Auswertegröße berechenbar ist. Sobald diese Standardabweichung größer ist als ein experimentell ermittelter Grenzwert, der dem Beurteilungskriterium entspricht, ist das Sauggas naß.

Bei der vorstehenden Beschreibung wurde von der Annahme ausgegangen, daß die vom Kompressor 6 der Kälteanlage 1 verursachte Pulsation des Sauggases das Meßsignal nicht störend beeinflußt. Falls jedoch die Grenzfrequenz, d.h. der Tiefpaß, der den Meßkörper 11 aufweisenden Meßvorrichtung 11, 12, 13 so groß ist, daß das Grundsignal störend beeinflußt wird, kann diese Störung durch eine analoge oder digitale Nachbearbeitung weggefiltert werden.

Sofern ein Flüssigkeitsfilm, ein Flüssigkeitsring oder andere Flüssigkeitsformen vorliegen, die für eine extreme Kühlung des beheizten Meßkörpers 11 mittels Wärmeableitung über die Halterung sorgen, addiert sich zu den vorstehend genannten Effekten noch, daß der verrauschte Meßwert über - verglichen mit der Dauer eines Signals für einen Flüssigkeitstropfen - längeren Zeiträumen schwankt. In diesem Fall ist das Sauggas sehr naß.

Sobald die Meßvorrichtung 11, 12, 13 extrem stark gekühlt wird, kann die Elektronik u.U. nicht mehr soviel Leistung liefern, daß die oben beschriebene Temperaturdifferenz zwischen dem Meßkörper 11 und dem weiteren Temperaturfühler 13 konstant gehalten wird. Auch in diesem Fall ist das Sauggas in der Saugleitung 71 extrem naß.

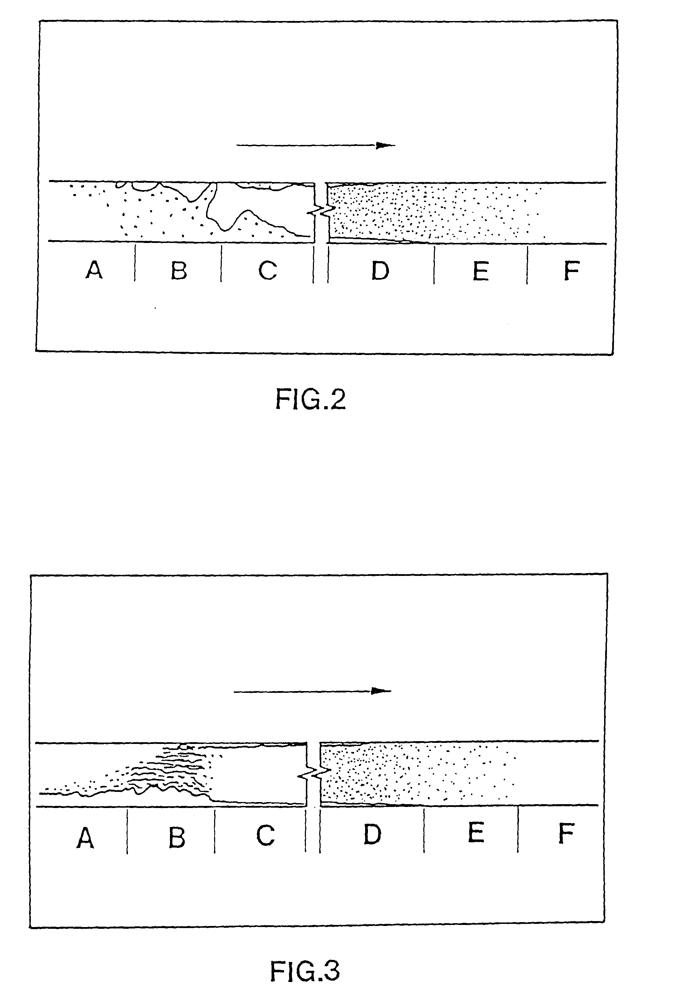

Eine in Figur 2 dargestellte Strömungsform ergibt sich im Kältemittelverdampfer 3 bei hoher Massenstromdichte, wobei am Eingang 8 des Kältemittelverdampfers 3 unterkühlte Flüssigkeit und am Ausgang 7 des Kältemittelverdampfers 3 überhitzter Dampf vorliegt. Im Bereich A liegt eine Blasenströmung, im Bereich B eine Kolbenblasenströmung, im Bereich C ein Flüssigkeitsring, im Bereich D ein Nebel mit Flüssigkeitsfilm, im Bereich E ein Nebel und im Bereich F ein einphasiges Fluid vor.

Eine in Figur 3 dargestellte Strömungsform ergibt sich bei einer geringen Massenstromdichte im Kältemittelverdampfer 3. Hierbei sind am Eingang 8 des Kältemittelverdampfers 3 bereits 20% des Kältemittels verdampft. Am Ausgang 7 des Kältemittelverdampfers 3 liegt überhitzter Dampf vor. Im Bereich A liegt eine Welle, im Bereich B ein Übergang, im Bereich C ein Flüssigkeitsring, im Bereich D ein Nebel mit Flüssigkeitsfilm, im Bereich E ein Nebel und im Bereich F ein einphasiges Fluid vor.

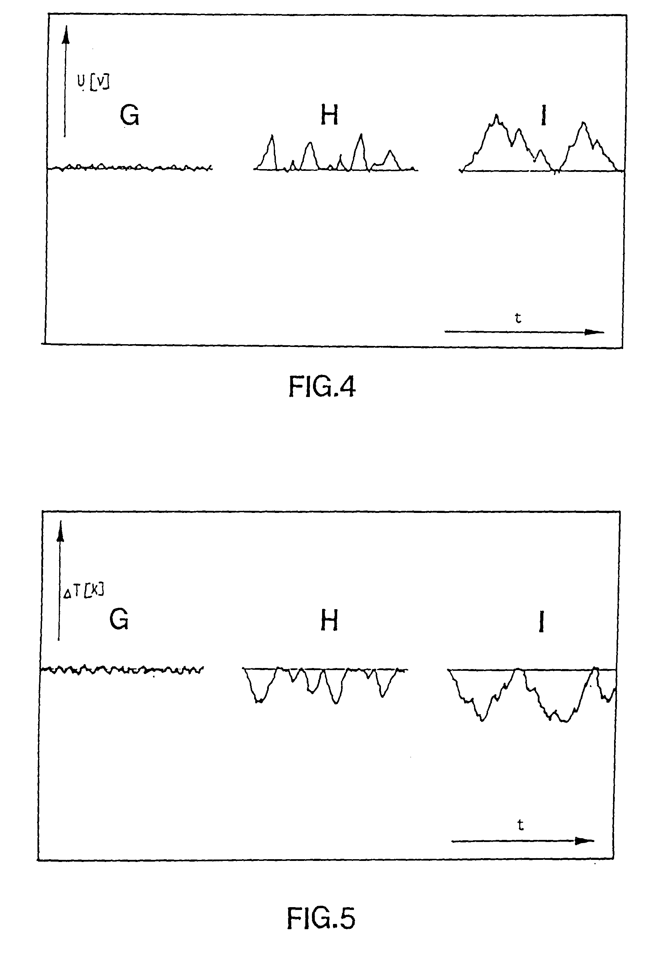

Das Meßsignal der als Tröpfchenfühler ausgestalteten Meßvorrichtung 11, 12, 13 ergibt sich bei konstanter Temperaturdifferenz zwischen dem Meßkörper 11 und dem weiteren Temperaturfühler 13 zu dem in Figur 4 dargestellten Graphen G, wenn das Sauggas trocken bzw. überhitzt ist, zu dem Graphen H, wenn ein kleiner örtlicher Flüssigkeitsgehalt vorliegt, und zu dem Graphen I, sofern ein großer örtlicher Flüssigkeitsgehalt vorliegt.

Bei konstanter Versorgungsspannung des Meßkörpers 11 der Meßvorrichtung 11, 12, 13 ergibt sich das Meßsignal zu dem in Figur 5 dargestellten Graphen G, sofern das Sauggas überhitzt bzw. trocken ist, zu dem Graphen H, sofern ein kleiner örtlicher Flüssigkeitsgehalt vorliegt, und zu dem Graphen I, sofern ein großer örtlicher Flüssigkeitsgehalt vorliegt.

Eine weitere, einfache Klassifizierung der Meßwerte ergibt sich wie folgt:

Beim Meßvorgang erfolgt im Abtastintervall Ta genau eine Messung. Die jeweils zu untersuchenden N-Meßwerte erfordern deshalb eine gesamte Meßzeit von NTa.

Bei Umwandlung des analogen Meßsignals in ein digitales Wort kann die Klassierung der Meßwerte vorteilhaft wie folgt vorgenommen werden:

Beim Meßvorgang werden in einem Zeitintervall Delta T in gleichen Zeitabständen, die auch Abtastintervalle Ta genannt werden, m Meßwerte erfaßt, d.h. Delta T = m x Ta.

Das Meßsignal der Meßvorrichtung bzw. des Tröpfchensensors wird dann z.B. in einen Analog/Digital-Umsetzer eingespeist. Dieser liefert nach jeder Abtastung ein digitales Wort, das proportional zum Amplitude des eingegebenen Meßsignals ist.

Das digitale Wort ist zugleich die Nummer der Klasse, in die dieser Meßwert zur Ermittlung der Amplitudenverteilung einzuordnen ist. Beispielsweise ergeben sich bei einem 10-bit-Analog/Digital-Umwandler 1024 Klassen, deren Klassenbreite bei einem Meßbereich 0 bis 30 Volt Delta U = 29,3 mV ist.

Das Auftreten eines digitalen Wortes wird als Ereignis aufgefaßt. Die Zahl dieser Ereignisse wird für jede Klasse getrennt aufsummiert. Die Summe stellt die absolute Häufigkeit in Klasse n dar.

Abschließend sei darauf hingewiesen, daß es zur Regelung der Verdampferfüllung vorteilhaft sein kann, außer dem Flüssigkeitsgehalt des Sauggases auch zusätzlich die Überhitzung Delta Tü bzw. die Differenz zwischen der Temperatur des Kältemittels am Verdampferausgang und der Temperatur des Kältemittels am Verdampfereingang zu benutzen. Die zuletzt genannte Größe ist besonders dann nützlich, wenn der Verdampfer nur wenig gefüllt ist, weil in diesem Arbeitspunkt u.U. der Flüssigkeitsgehalt sehr klein ist und deshalb nur wenig Information enthält.

**Patentansprüche**

1. Verfahren zur Einstellung, Regelung und Überwachung des Füllungsgrads eines in einem geschlossenen Kreislauf einer Kältemaschine (1) angeordneten und einen Kältemittelmassenstrom (4) zu einem im wesentlichen trockenen Sauggas verdampfenden Kältemittelverdampfers (3), bei dem in eine dem Kältemittelverdampfer (3) nachgeordnete Sauggasleitung (71) ein beheizbarer Meßkörper (11) eingesetzt wird, der Meßkörper (11) vom Sauggas umspült wird, der Meßkörper (11) auf eine die Temperatur des Sauggases übersteigende Temperatur aufgeheizt wird, das Auftreffen von Flüssigkeitstropfen des Kältemittels auf den Meßkörper (11) durch Messung der zur Verdampfung der Flüssigkeitstropfen erforderlichen Energie erfaßt wird, dadurch gekennzeichnet, daß aus dem erfaßten Meßsignal Meßpunkte ermittelt werden, die einem trockenen Sauggas entsprechen, und aus diesen Meßpunkten ein Grundsignal bestimmt wird, das dem elektronischen Rauschen einer zur Durchführung des Verfahrens verwendeten Meß- und Auswerteeinheit (93) und der Vorbeiströmung des trockenen Sauggases am Meßkörper (11) entspricht, die Differenz zwischen den übrigen Werten des Meßsignals und diesem Grundsignal ermittelt und einem einstellbaren Referenzwert gegenübergestellt wird, der für dasjenige Niveau des Feuchtigkeitsgehalts des Sauggases festgelegt wird, oberhalb dessen das Sauggas als feucht anzusehen ist, und zur Einstellung, Regelung und Überwachung des Füllungsgrades verwendet wird.

2. Verfahren nach Anspruch 1, bei dem als Meßgröße die mittels eines Temperaturfühlers (12) erfaßte Temperatur des Meßkörpers (11) verwendet wird.

3. Verfahren nach Anspruch 1, bei dem als Meßgröße der Energieaufwand zur Aufrechterhaltung einer konstanten Temperatur des Meßkörpers (11) oberhalb der Sauggastemperatur verwendet wird.

4. Verfahren nach Anspruch 3, bei dem als Meßgröße die Spannung einer zur Heizung des Meßkörpers (11) eingesetzten und mit konstanter Stromstärke betriebenen Energieversorgungsanlage verwendet wird.

5. Verfahren nach Anspruch 3, bei dem als Meßgröße die Stromstärke einer zur Beheizung des Meßkörpers (11) eingesetzten und mit konstanter Spannung betriebenen Energieversorgungsanlage verwendet wird.

6. Verfahren nach Anspruch 3, bei dem als Meßgröße die elektrische Leistung einer zur Beheizung des Meßkörpers (11) eingesetzten Energieversorgungsanlage verwendet wird.

7. Verfahren nach einem der Ansprüche 1 bis 6, bei dem in einem vorgebbaren Zeitintervall Delta T in jeweils gleichen Zeitabständen ein die Meßgröße angebendes Meßsignal (m) erfaßt wird und die während des Zeitintervalls Delta T erfaßten Meßsignale (m) auf Größenklassen aufgeteilt werden, wobei der ersten Größenklasse alle Meßsignale (m), die zwischen Mmin und Mmin+ Delta M liegen, und der letzten Größenklasse alle Meßsignale (m), die zwischen Mmax - Delta M und Mmax liegen, zugeordnet werden und sich die Anzahl (n) der Größenklassen aus dem Quotienten aus der Differenz (Mmax - Mmin) : Delta M ergibt.

8. Verfahren nach Anspruch 7, bei dem Delta M so bemessen wird, daß die erste Größenklasse zumindest dem sich aus dem elektronischen Rauschen der Meß- und Auswerteeinheit ergebenden ersten Teilsignal und die erste plus zweite Größenklasse zumindest dem Grundsignal entspricht.

9. Verfahren nach Anspruch 7 oder 8, bei dem eine den Meßkörper (11) aufweisende Meßvorrichtung als Massenstrommesser für trockenes Sauggas kalibriert ist.

10. Verfahren nach einem der Ansprüche 7 bis 9, bei dem zur Aufteilung der Meßsignale (m) in Größenklassen ein Vielkanalanalysator eingesetzt wird.

11. Verfahren nach einem der Ansprüche 1 bis 6, bei dem in einem vorgebbaren Zeitintervall Delta T in jeweils gleichen Zeitabständen ein die Meßgröße angebendes Meßsignal (m) erfaßt, aus den sich ergebenden Werten ein Minimal- und ein Maximalwert ermittelt, die Differenz zwischen Maximal- und Minimalwert errechnet und als Auswertegröße mit der sich aufgrund des elektronischen Rauschens und der Vorbeiströmung des trockenen Sauggases am Meßkörper (11) ergebenden Rauschbreite verglichen wird.

12. Verfahren nach einem der Ansprüche 1 bis 6, bei dem mit einer Erkennungsschaltung eine binäre Impulsfolge erzeugt wird und die Anzahl der während eines vorgegebenen Zeitraums anfallenden Impulse mit einem für den maximal zulässigen Feuchtigkeitsgehalt des Sauggases festgelegten entsprechenden Grenzwert verglichen wird.

13. Verfahren nach einem der Ansprüche 1 bis 6, bei dem mittels jeweils einer Erkennungsschaltung das Minimum bzw. das Maximum der Meßgröße ermittelt, mittels analoger Differenzbildung die Amplitude zwischen zwei aufeinanderfolgenden Extremwerten als Auswertegröße ermittelt und mit einem für den maximal zulässigen Feuchtigkeitsgehalt des Sauggases festgelegten entsprechenden Grenzwert verglichen wird.

14. Verfahren nach einem der Ansprüche 1 bis 6, bei dem die Meßsignale (m) durch eine mathematische Funktion, z.B. durch ein Polynom approximiert werden, die Standardabweichung von der Funktion als Auswertegröße errechnet und mit einem für den maximal zulässigen Feuchtigkeitsgehalt des Sauggases festgelegten entsprechenden Grenzwert verglichen wird.

15. Verfahren nach einem der Ansprüche 7 bis 11, bei dem die dem Meßsignal (m) überlagerten, vom Kompressor (6) der Kälteanlage (1) verursachten periodischen Schwankungen durch eine analoge oder digitale Filterung eliminiert werden.

16. Verfahren nach einem der Ansprüche 7 bis 11, bei dem die Meßdaten einer Spektralanalyse unterworfen werden, wobei aus den Meßdaten die Autokorrelationsfunktion oder eine andere Funktion, die aus der Autokorrelationsfunktion gewonnen werden kann, bestimmt wird und wobei als Vergleichs funktion diejenige aus dem Grundsignal ermittelte Funktion dient.

17. Verfahren nach einem der Ansprüche 1 bis 16, bei dem separat die Strömungsgeschwindigkeit des Sauggases ermittelt wird und diese Strömungsgeschwindigkeit zur Bestimmung des Grundsignals herangezogen wird.

## Claims

1. Method of setting, regulating and monitoring the rate of feeding of a refrigerant vaporizer (3) disposed in a closed circuit of a refrigerator (1) and vaporizing a mass flow of refrigerant (4) to a substantially dry suction gas, in which a measuring body (11) which can be heated is inserted in a suction-gas duct (71) disposed downstream of the refrigerant vaporizer (3), the suction gas bathes the measuring body (11), the measuring body (11) is heated to a temperature exceeding the temperature of the suction gas, and the impact of fluid droplets of the refrigerant on the measuring body (11) is detected by measurement of the energy required to vaporize the fluid drops, <u>characterized in that</u> measurement points which correspond to a dry suction gas are determined from the measurement signal detected and, from these measurement points, a basic signal is determined, which corresponds to the electronic noise of a measuring and evaluation unit (93) used for implementing the method and of the flow of the dry suction gas past the measuring body (11), the difference between the additional value of the measurement signal and this basic signal is determined and compared with an adjustable reference value which is fixed for that level of the moisture content of the suction gas above which the suction gas is to be regarded as moist, and is used for the setting, regulation and monitoring of the rate of feeding.

2. Method according to Claim 1, in which the temperature of the measuring body (11) detected by means of a temperature sensor (12) is used as the quantity to be measured.

3. Method according to Claim 1, in which the expenditure of energy to maintain a constant temperature of the measuring body (11) above the suction-gas temperature is used as the quantity to be measured.

4. Method according to Claim 3, in which the voltage of an energy supply used to heat the measuring body (11) and operated with a constant current intensity is used as the quantity to be measured.

5. Method according to Claim 3, in which the current intensity of an energy supply used to heat the measuring body (11) and operated with a constant voltage is used as the quantity to be measured.

6. Method according to Claim 3, in which the electrical power of an energy supply used to heat the measuring body (11) is used as the quantity to be measured.

7. Method according to any one of Claims 1 to 6, in which a measurement signal (m) indicative of the quantity to be measured is detected, at the same time intervals each time, in a period of time delta T which can be predetermined, and the measurement signals (m) detected during the period of time delta T are divided into size categories, all measurement signals (m) which lie between Mmin and Mmin+ delta M being associated with the first size category and all measurement signals (m) which lie between Mmax - delta M and Mmax being associated with the last size category and the number (n) of size categories being established from the quotient of the difference (Mmax - Mmin) ÷ delta M.

8. Method according to Claim 7, in which delta M is of a size such that the first size category corresponds at least to the first signal portion resulting from the electronic noise of the measurement and evaluation unit, and the first plus second size category corresponds at least to the basic signal.

9. Method according to Claim 7 or Claim 8, in which a measuring device comprising the measuring body (11) is calibrated as a mass-flow meter for dry suction gas.

10. Method according to any one of Claims 7 to 9, in which a multi-channel analyzer is used to divide the measurement signal (m) into size categories.

11. Method according to any one of Claims 1 to 6, in which a measurement signal (m) indicative of the quantity to be measured is detected, at the same time intervals each time, in a period of time delta T which can be predetermined, a minimum and a maximum value are determined from the resulting values, the difference between the maximum and minimum values is calculated and is compared, as an evaluation quantity, with the noise width arising owing to the electronic noise and to the flow of the dry suction gas past the measuring body (11).

12. Method according to any one of Claims 1 to 6, in which a binary pulse train is produced by an identification circuit and the number of pulses occurring during a predetermined period of time is compared with a corresponding threshold value fixed for the maximum permissible moisture content of the suction gas.

13. Method according to any one of Claims 1 to 6, in which the minimum and the maximum of the quantity to be measured are determined by means of respective identification circuits, the amplitude between two successive extreme values is determined as an evaluation quantity by analog subtraction and is compared with a corresponding threshold value fixed for the maximum permissible moisture content of the suction gas.

14. Method according to any one of Claims 1 to 6, in which the measurement signals (m) are approximated by a mathematical function, for example, by a polynomial, the standard deviation from the function is calculated as an evaluation quantity and is compared with a corresponding threshold value fixed for the maximum permissible moisture content of the suction gas.

15. Method according to any one of Claims 7 to 11, in which the periodic oscillations caused by the compressor (6) of the refrigerator (1) and superimposed on the measurement signal (m) are eliminated by analog or digital filtering.

16. Method according to any one of Claims 7 to 11, in which the measurement data are subjected to spectral analysis, in which the autocorrelation function or another function which can be derived from the autocorrelation function is determined from the measurement data, and in which that function which is determined from the basic signal serves as the comparison function.

17. Method according to any one of Claims 1 to 16, in which the flow-rate of the suction gas is determined separately and this flow-rate is taken into consideration in order to determine the basic signal.

**Revendications**

1. Procédé de réglage, de régulation et de surveillance du degré de remplissage d'un évaporateur (3) de fluide frigorigène placé dans un circuit fermé d'une machine frigorifique (1) et vaporisant un flux massique (4) de fluide frigorigène pour donner un gaz sensiblement sec, dans lequel un élément de mesure (11) chauffé est placé dans une conduite (71) de gaz située en aval de l'évaporateur (3), l'élément de mesure (11) est baigné par le gaz, l'élément de mesure (11) est chauffé à une température supérieure à la température du gaz, la formation de gouttelettes de fluide frigorigène liquide sur l'élément de mesure (11) est détectée par mesure de l'énergie nécessaire à l'évaporation des gouttelettes de liquide, caractérisé par le fait qu'à partir du signal mesuré on détermine des points de mesure qui correspondent à un gaz sec et, à partir de ces points de mesure, on définit un signal de base qui correspond au bruit électronique d'une unité de mesure et de traitement (93) utilisée pour la mise en oeuvre du procédé et à l'écoulement du gaz sec autour de l'élément de mesure (11), on calcule la différence entre les autres valeurs du signal mesuré et ledit signal de base et on la compare à une valeur de référence réglable qui est imposée pour le taux d'humidité du gaz, au-delà de laquelle le gaz est considéré comme humide, et on l'utilise pour le réglage, la régulation et la surveillance du degré de remplissage.

2. Procédé selon la revendication 1, dans lequel on utilise comme variable mesurée, la température de l'élément de mesure (11) mesurée à l'aide d'un capteur de température (12).

3. Procédé selon la revendication 1, dans lequel on utilise comme variable mesurée la consommation en énergie pour le maintien d'une température constante de l'élément de mesure (11), supérieure à la température du gaz .

4. Procédé selon la revendication 3, dans lequel on utilise comme variable mesurée la tension d'un système d'alimentation en énergie utilisé pour chauffer l'élément de mesure (11) et fonctionnant avec une intensité de courant constante.

5. Procédé selon la revendication 3, dans lequel on utilise comme variable mesurée l'intensité de courant d'un système d'alimentation en énergie utilisé pour chauffer l'élément de mesure (11) et fonctionnant avec une tension constante.

6. Procédé selon la revendication 3, dans lequel on utilise comme variable mesurée la puissance électrique d'un système d'alimentation en énergie utilisé pour chauffer l'élément de mesure (11).

7. Procédé selon l'une des revendications 1 à 6 dans lequel on mesure dans une fenêtre de temps Delta T prédéterminée, à intervalles constants, un signal (m) représentant la variable mesurée et on répartit en classes de niveau tous les signaux (m) mesurés dans la fenêtre de temps Delta T, la première classe de niveau contenant tous les signaux (m) compris entre Mmin et Mmin + Delta M et la dernière classe de niveau contenant tous les signaux (m) compris entre Mmax et Mmax + Delta M et le nombre (n) des classes de niveau étant donné par le quotient de la différence (Mmax - Min) : Delta M.

8. Procédé selon la revendication 7, dans lequel on définit Delta M de telle sorte que la première classe de niveau corresponde au moins au premier signal élémentaire résultant du bruit de l'unité de mesure et de traitement et que la première plus la deuxième classe de niveau corresponde au moins au signal de base.

9. Procédé selon la revendication 7 ou 8, dans lequel on étalonne un dispositif de mesure contenant l'élément de mesure (11) en tant que dispositif de mesure de flux massique pour le gaz sec.

10. Procédé selon l'une des revendications 7 à 9, dans lequel on utilise un analyseur multicanaux pour répartir les signaux (m) mesurés en classes de valeurs.

11. Procédé selon l'une des revendications 1 à 6, dans lequel on mesure dans une fenêtre de temps Delta T prédéterminée, à intervalles constants, un signal (m) représentant la variable mesurée, on détermine à partir des valeurs obtenues une valeur maximale et une valeur minimale, on calcule la différence entre la valeur maximale et la valeur minimale et on la compare en tant que valeur de traitement à la largeur de bande de bruit résultant du bruit électronique et de l'écoulement du gaz sec autour de l'élément de mesure (11).

12. Procédé selon l'une des revendications 1 à 6, dans lequel on produit, à l'aide d'un circuit de détection, une séquence binaire d'impulsions et on compare le nombre des impulsions produites pendant un laps de temps prédéterminé avec une valeur seuil fixée correspondante pour le taux d'humidité maximal admissible pour le gaz .

13. Procédé selon l'une des revendications 1 à 6, dans lequel on détermine à l'aide d'un circuit de détection le minimum et le maximum de la variable mesurée, on détermine par formation analogique de la différence l'amplitude entre deux valeurs extrêmes consécutives et on la compare en tant que valeur de traitement avec une valeur seuil fixée correspondante pour le taux d'humidité maximal admissible pour le gaz.

14. Procédé selon l'une des revendications 1 à 6, dans lequel on approche par une fonction mathématique, par exemple par un polynôme, les signaux (m) mesurées on calcule l'écart standard par rapport à la fonction et on la compare en tant que valeur de traitement avec une valeur seuil fixée correspondante pour le taux d'humidité maximal admissible pour le gaz.

15. Procédé selon l'une des revendications 7 à 11, dans lequel on élimine par filtrage analogique ou numérique les fluctuations périodiques causées par le compresseur (6) de l'installation frigorifique (1) superposées au signal (m) mesuré.

16. Procédé selon l'une des revendications 7 à 11, dans lequel on soumet les données mesurées à une analyse spectrale, la fonction d'auto-corrélation ou une autre fonction pouvant être obtenue à partir de la fonction d'auto-corrélation étant définie à partir des données mesurées et la fonction déterminée à partir du signal de base servant de fonction de référence.

17. Procédé selon l'une des revendications 1 à 16, dans lequel on détermine séparément la vitesse d'écoulement du gaz et on utilise cette vitesse d'écoulement pour définir le signal de base.

FIG.1

FIG.2

FIG.3

FIG.4

FIG.5

FIG.6

FIG.6A

FIG.7

FIG.7A

17

FIG.8

FIG.8A

FIG.9

FIG.9A